Europäisches Patentamt

European Patent Office

Office européen des brevets

(11) Publication number: **0 180 100**
**B1**

(12) **EUROPEAN PATENT SPECIFICATION**

(45) Date of publication of patent specification: 16.05.90

(51) Int. Cl.⁵: **G 11 B 20/10,** G 11 B 20/12, G 11 B 20/14, G 11 B 20/16

(21) Application number: 85113175.5

(22) Date of filing: 17.10.85

(54) **Apparatus and method for recording and recovering a binary symbol sequence using an intermediate step of converting the binary sequence into a ternary sequence.**

(30) Priority: 29.10.84 US 665807

(43) Date of publication of application:
07.05.86 Bulletin 86/19

(45) Publication of the grant of the patent:
16.05.90 Bulletin 90/20

(84) Designated Contracting States:
DE FR GB

(56) References cited:
EP-A-0 064 406
GB-A-2 029 171
US-A-3 133 274
US-A-3 618 044
US-A-3 866 147

(73) Proprietor: International Business Machines Corporation
Old Orchard Road
Armonk, N.Y. 10504 (US)

(72) Inventor: Langdon, Glen George, Jr.
6772 Hampton Drive
San Jose California 95120 (US)
Inventor: Siegel, Paul Howard
1284 Juli Lynn Drive
San Jose California 95120 (US)

(74) Representative: Atchley, Martin John Waldegrave
IBM United Kingdom Limited Intellectual Property Department Hursley Park
Winchester Hampshire SO21 2JN (GB)

Courier Press, Leamington Spa, England.

# EP 0 180 100 B1

**Description**

The present invention relates to apparatus and a method for converting a binary symbol string or sequence into a ternary symbol string or sequence and synchronously recording the ternary symbol string or sequence onto a recording medium, and for subsequently recovering the binary symbol string or sequence.

In the prior art, Cupp, in United States Patent Specification A—3,618,044, discloses and claims a method and apparatus for converting a binary symbol string or sequence into a ternary symbol sequence, transforming the ternary symbol sequence into a clocked multilevel recording signal and imprinting the recording signal upon a magnetic medium. Cupp, however, is concerned with and processes absolute signal levels rather than signal transitions.

Larkin, in United States Patent Specification A—3,133,274, converts a ternary symbol string or sequence into a binary (2-level) write current waveform, which waveform is then used for saturation recording. Further, Larkin uses a synchronous clock and a peak/polarity detector for recovering the saturated recorded code symbols. Central to his invention is the notion of decoding a detected positive peak as a "2", and a negative peak as a "1". In Larkin, the absence of a peak is taken to be a "0". It should be appreciated that, in saturation recording, a negative and positive peak must alternate. Thus, it would not be possible in Larkin to record and recover a string of "2" followed by "2". That is, one could not force two consecutive peaks to both be positive. This is avoided in Larkin by inserting a dummy negative peak in-between the positive peaks corresponding to the "2" symbols. This superfluous negative peak will not occur at a code bit time as marked by the clock. Therefore, Larkins discards all such superfluous or dummy peaks which were inserted solely to conform to the necessary peak polarity alternation as the detected peaks are decoded into code symbols. However, Larkin ignores the effect of insertion of superfluous transitions in the write signal "in-between clock times" which is the shifting of peaks from their expected positions. Peak insertion will increase the detection error unless the clock is slowed down and recording density is lost.

The object of the present invention is to provide an improved apparatus and method for recording and recovering binary symbol sequence of the type which comprises conversion means for converting the binary symbol sequence into a ternary symbol sequence, and recording means for recording representations of the ternary symbol sequence, together with means for recovering the binary symbol sequence from the recorded representations.

In accordance with the invention, the recording apparatus is characterised in that the conversion means comprises mapping means for mapping the binary symbol sequence into a direction constrained run length limited ternary symbol sequence, and the recording means comprises means for recording the ternary symbol sequence as selected recording levels with half transitions and full transitions between recording levels in such a way that each half transition is followed by another half transition of the same polarity.

The present invention also relates to a method of recording representations of a binary symbol sequence utilising recording apparatus as above.

The present invention further relates to recording apparatus as above in combination with apparatus for recovering the binary symbol sequence from the recorded representations of the type which comprises reading means for generating output signals corresponding to the recorded representations and for converting the output signals into the binary symbol sequence.

The reading means comprises detecting means for detecting each transition in the recording levels, for determining the polarity of each detected transition and for generating corresponding signals. The reading means further comprises first converting means for converting the signals into a ternary symbol sequence, and second converting means for converting the ternary symbol sequence into the binary symbol sequence.

The present invention still further relates to a method of recovering the binary symbol sequence from the recorded representations using the combination of recording apparatus and recovering apparatus as above.

The apparatus and method of the invention use selective direction constrained run length limited (RLL) recorded sequences. The direction constraint imposes the rule that half step transitions in the recording levels can only occur in pairs of the same polarity. Alternate half step transition pairs of opposite polarity are forbidden. Forcing the half step transitions to occur in consecutive pairs with the same polarity avoids the need for discrimination of the amplitude of the recording levels. The RLL (d, k), constraint includes a "d" number of clock times when a transition is forbidden and "k > d" clock times within which consecutive transitions must occur. The latter determines a minimum frequency for clocking purposes while the former eases the transition shift problem by optimising the minimum transition spacing.

The apparatus and method of the present invention are distinguished from the prior art arrangements as follows.

The invention of Cupp, in United States Patent Specification A—3,618,044, unlike the present invention, fails to impose either an RLL constraint or consecutive half-pulse pairs of like polarity constraint therein. Consequently, the invention of Cupp, unlike the present invention, fails to overcome the peak shift problem resolved by the invention. Further, the invention of Cupp apparently relies upon an equaliser to compensate for the amplitude differences between half- and full-step peaks.

In contrast with the present invention, the dummy transitions of the invention of Larkin, in United States Patent Specification A—3,133,274, would probably cause severe peak shift which would lead to errors in clocking the detected peaks. As a result, some type of run length limited code would be necessary to achieve high recording density. Lastly, the invention of Larkin does not address the loss of potential data density occasioned by his use of dummy transitions. The insertion of these transitions merely adds redundancy rather than information to the recorded string.

In order that the invention may be more readily understood an embodiment will now be described with reference to the accompanying drawings, in which:

Figure 1 illustrates a frequency constrained full-ternary channel waveform.

Figure 2 illustrates a direction constrained full-ternary channel waveform.

Figure 3 is a block diagram representation of a system for the conversion of a binary code into a direction constrained ternary coded waveform.

Figure 4 illustrates the conversion of blocked binary symbols to RLL direction constrained ternary symbols.

Figure 5 is a block diagram representation of a system for the recovery of a ternary encoded signal.

Figure 6 illustrates the conversion of blocked RLL direction constrained ternary symbols to binary symbols,

Figure 7 illustrates a clocked waveform-to-ternary conversion according to the invention.

Figures 8 and 9 exhibit circuits for recovery of the (1, 3) direction-constrained ternary code from a peak and polarity detected waveform.

Current approaches in the prior art to recording digital information on magnetic media use only two levels of magnetisation. That is, the medium is saturated in either one of two polarities. However, with AC bias recording, it becomes possible to achieve discrete levels of magnetisation on magnetic media such as disks or tapes.

In contrast to the prior art, the invention of the present Application utilises three states of "levels" of magnetisation. The three levels of magnetisation are: saturated minus (−a), saturated plus (+a), and degaussed (0). In the method and apparatus of the invention, a medium to be magnetised selectively in the three levels of magnetisation passes under a read/write head and the time taken by the medium to pass under the head is divided into "bit periods" or recording channel time units.

When two levels of magnetisation are employed in a system of encoding, a detector used to read out the recorded code need only detect the existence of a flux or magnetisation reversal and assign it to a bit period or channel time unit. Information concerning the direction of the flux or magnetisation reversal is redundant. If a system of coding which employes both the existence and direction of flux or magnetisation reversals is used, then more information can be packed into the code strings.

When three levels of magnetisation are used, this is called a "ternary channel". Run length or frequency constraints, which define when the next flux or magnetisation transition is allowed to occur relative to the last transition, may be applied to a ternary channel. When no other constrains are applied, this is called a full-ternary RLL (Run Length Limited) channel. For a full-ternary RLL channel, there are two choices for each transition irrespective of the starting point. Each transition can go from +a to −a or 0, or from 0 to −a or +a, or from −a to 0 or +a. The detector must be able to discriminate between a relatively small half transition from +a to 0 and a relatively large full transition from +a to −a, by a magnitude of the detected flux reversal. Thus, two thresholds are required to be established; that is, a first threshold between noise and a half transition (+a to 0), and a second threshold between a half transition and a full transition (+a to −a).

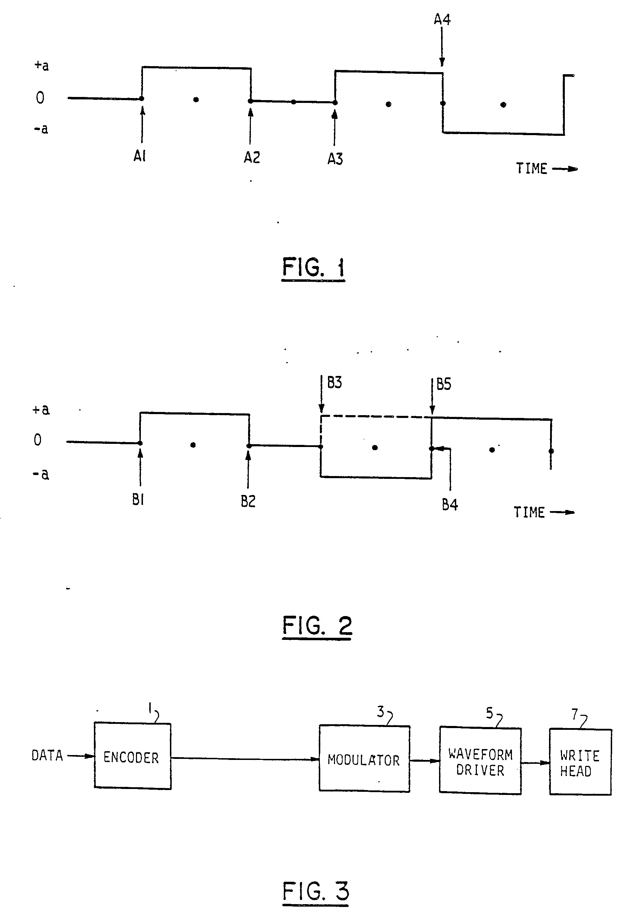

Referring now to Figure 1, there is shown the waveform of a full-ternary channel with a (1, 3) frequency constraint. This is an extension of the waveform of a binary channel with a (1, 3) frequency constraint where there is a requirement to have the next flux transition no sooner than (d+1) time units but no later than (k+1) time units after the last flux transition, d being 1 and k being 3. Once the two time units have occurred following the last flux transition, the ternary channel may have a flux transition to either of the other two channel magnetisation levels. In Figure 1 it will be noted that at A1, A2 and A3 there are half transitions betweeen 0 and +a and at A4 there is a full transition between +a and −a. In order to be able to detect both of these types of flux transition it is necessary to establish in the detector two thresholds, as referred to above.

In accordance with the present invention, there are also direction constraints which relieve the detector of the need to establish a double threshold and yet achieve increased information carrying capacity in the use of three magnetisation or recording levels.

Referring now to Figure 2, there is shown the waveform of a direction constrained ternary channel in accordance with the present invention. In considering the "problem transitions" of the full-ternary channel waveform with the (1, 3) frequency constraints illustrated in Figure 1, it is necessary to distinguish a half transition (e.g. +a to 0) from a full transition (e.g. +a to −a) and the similar transitions starting at the recording state −a. To avoid these problem transitions, in accordance with the present invention and as illustrated in Figure 2, there is introduced the requirement that a half transition (e.g +a to 0) must be followed by a half transition of the same polarity (e.g. 0 to −a). That is, the waveform leaves the 0 state in the same direction as it enters this state.

The flux transitions are illustrated in Figure 2 at B1 to B5. At B1 there is a positive half transition from 0 to +a. At B2 there is a negative half transition from +a to 0. At B3, in accordance with the direction constraints applied to the waveform, the transition cannot be a positive half transition from 0 to +a (as indicated by the dotted line) since the previous transition was a negative half transition from +a to 0. Therefore the transition at B3 is a negative half transition from 0 to −a. At B4 and B5 two positive half transitions take place in succession. At B4 the first positive half transition is from −a to 0 and at B5 the second positive half transition is from 0 to +a which is permitted by the direction constraints.

If the waveform is differentiated each flux transition will be represented by a peak having a polarity representative of the direction (positive or negative) of the transition.

With the arrangement described above, there is no need to discriminate between the relatively small magnitude of the half transitions and the relatively large magnitude of the full transitions when the waveform is being read provided the waveform is initially differentiated. It is sufficient to observe the polarity of each peak in the differentiated waveform if the polarity of the next observed peak is also noted. If the read out circuitry detects two successive peaks of the same polarity, the flux transition corresponding to the first peak must have been a half magnitude transition and the flux transition corresponding to the second peak must also have represented a half magnitude transition. Therefore, after having determined the polarity of the next peak, a determination can be made as to whether the previous peak represented a transition of half magnitude of full magnitude.

Referring now to Figure 3, there is shown a logical block diagram of a system in accordance with the present invention for the conversion of a binary datastream into a form of coding suitable for generating either a positive P, a zeo Z, or a negative N magnetisation amplitude level to be impressed upon a suitable recording medium to represent a ternary code sequence. For a (1, 3) code, the binary data is blocked three bits at a time and applied to an encoder 1. The encoder 1, employing a direction constrained binary-to-ternary transformation, generates a sequence of ternary code symbols, and symbol of which may assume the value of 0, 1 or 2, and this is supplied to a modulator 3. In turn, modulator 3 and a waveform driver 5 transform the ternary code sequence into a sequence of magnetisation amplitude levels, (P, Z or N) which is applied by a write head 7 to a magnetic recording medium.

In this and the following discussion, reference will be made to finite state machine (FSM) representation and design. Thus, following Wulf et al, "Fundamental Structures of Computer Science", Addison-Wesley Publishing Co., ISBN 0—201—08725—1, pp. 9—48, the machine equivalent of digital computing transformations can be represented by an FSM having an input symbol set, an output symbol set, a set of internal states, a first function for mapping an ordered pair drawn from an input symbol and a pressent internal state into a next internal state, and a second function for mapping an ordered pair of input symbols and internal states into an output symbol. In this regard, one could consider the conversion of a binary bit sequence into magnetic recording levels as performed by the system illustrated in Figure 3 as being performed by two successve FSM's. The first FSM is formed by encoder 1 and the second FSM is formed by the modulator 3, the waveform driver 5, and the write head 7.

## TABLE 1

|   | 000 | 001 | 010 | 011 | 100 | 101 | 110 | 111 |
|---|------|------|------|------|------|------|------|------|
| A | 0101/A | 0101/B | 0010/C | 0010/D | 0010/E | 0100/F | 0100/G | 0100/H |
| B | 0001/A | 0001/B | 0202/A | 0202/B | 0102/K | 0002/K | 0020/K | 0020/L |
| C | 0101/A | 0101/B | 1010/C | 1010/D | 1010/E | 0100/F | 0100/G | 0100/H |
| D | 1001/A | 1001/B | 0010/C | 0010/D | 0010/E | 1000/I | 1000/J | 1002/K |
| E | 2002/A | 2002/B | 0202/A | 0202/B | 2020/C | 2020/D | 2020/E | 2000/L |
| F | 0101/A | 0101/B | 1010/C | 1010/D | 1010/E | 0100/F | 0100/G | 0100/H |
| G | 1001/A | 1001/B | 1020/K | 1020/L | 0102/K | 1000/I | 1000/J | 1002/K |
| H | 2002/A | 2002/B | 0202/A | 0202/B | 2020/C | 2020/D | 2020/E | 2020/L |
| I | 1001/A | 1001/B | 1010/C | 1010/D | 1010/E | 1000/I | 1000/J | 1002/K |
| J | 2002/A | 2002/B | 1020/K | 1020/L | 2020/C | 2020/D | 2020/E | 2000/L |
| K | 0201/A | 0201/B | 0200/F | 0200/G | 0200/H | 0020/C | 0020/D | 0020/E |
| L | 2001/A | 2001/B | 2010/C | 2010/D | 2010/E | 2020/K | 2020/L | 2000/I |

ENCODING TABLE FOR DIRECTION CONSTRAINED
TERNARY (1, 3) CODE

Referring now to Table 1 above, there is shown an encoding table representation of the first FSM formed by encoder 1 (Figure 3). A (1, 3) direction constrained ternary code sequence is to be produced at the output of the encoder and the input binary bit sequence is blocked and applied to the encoder in blocks of three bits at a time. Thus, there are eight possible 3-bit input combinations. These are represented by appropriate columns in Table 1. Each of the twelve row entries labelled A, B, C . . . . L designated a counterpart internal state of the FSM of encoder 1. Each combination of row and column entry defines the ternary output of the next internal state to be assumed by the encoder for each kind of input. Thus, if the 3-bit input combination "100" is supplied to the encoder when it is in state G, then the output will be "0102" with the next internal state assumed by the encoder for the next input combination being "K". If the next input combination is "010", with the encoder in state K, the output will be "0200" with the next state of the encoder being F.

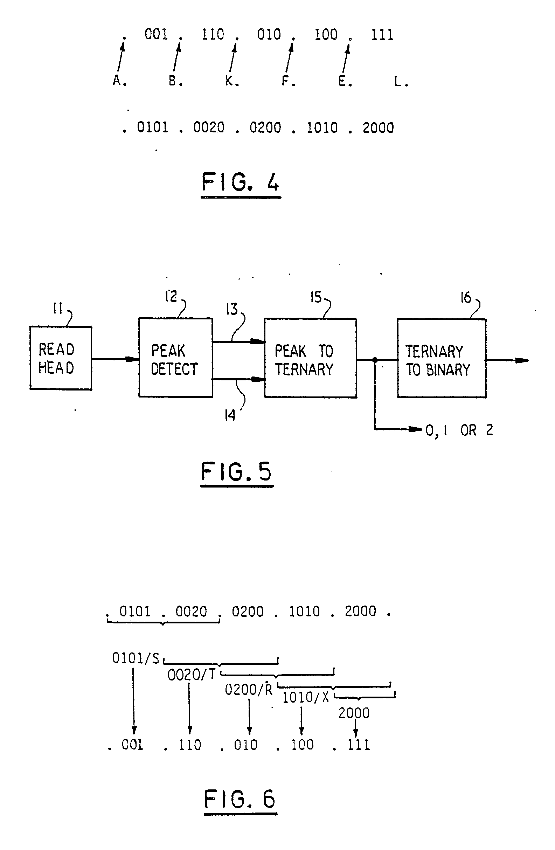

Figure 4 also illustrates the conversion of blocked binary data to a ternary string. The internal state of the encoder is shown at each step, along with the ternary output of the encoder. In Figure 4, the top row indicates the successive binary input blocks, the middle row indicates the internal state of the FSM before and after the supply of each input block and the bottom row indicates the ternary code output for each successive binary input block.

TABLE 2

| PRESENT STATE | TERNARY VALUE | NEXT STATE | EFFECT ON WAVEFORM |
|---|---|---|---|
| P | 0 | P | NONE |
| N | 0 | N | NONE |
| K | 0 | K | NONE |
| L | 0 | L | NONE |
| P | 1 | N | FULL NEGATIVE |
| N | 1 | P | FULL POSITIVE |
| K | 1 | VIOLATION OF DIRECTION CONSTRAINT | |
| L | 1 | VIOLATION OF DIRECTION CONSTRAINT | |
| P | 2 | K | HALF NEGATIVE TO O |
| N | 2 | L | HALF POSITIVE TO O |
| K | 2 | N | HALF NEGATIVE TO N |
| L | 2 | P | HALF POSITIVE TO P |

State Conversion of Ternary Values
and Effect on Waveform

Referring now to Table 2 above, there is shown a tabular representation of the second FSM formed by the modulator 3, the waveform driver 5 and the write head 7 (Figure 3). This FSM takes ternary values from the encoder 1, one at a time, as inputs and produces direction constrained amplitude levels as a ternary waveform output suitable for recording on a magnetic medium. In this second FSM, four internal states are represented, these being P, N, K and L. As an operative example, for an input ternary value of O and an internal state of N, then the next internal state will be N and there is no change or transition in the waveform output. If this is followed by an input ternary value of 1 with the FSM being in internal state N, then the next internal state will be P and the waveform output will undergo a full positive transition. If the next ternary value is 2 with the internal state P, then the next internal state will be K and the waveform output will undergo a negative half transition to O. In the FSM of Table 2, two row entries, namely for present internal states K and L having a ternary value input of 1, have neither a next internal state nor any effect on the waveform output. Indeed, these are forbidden. Such circumstances represent full transitions from degaussed state (O), which are impossible.

## TABLE 3

| 000 | 001 | 010 | 011 | 100 | 101 | 110 | 111 |
|---|---|---|---|---|---|---|---|
| 0101/Q | 0101/S | 0010/R | 0010/U | 0010/X | 0100/R | 0100/W | 0100/X |
| 0001/Q | 0001/S | 0202/Q | 0202/S | 0102 | 0002 | 0020/T | 0020/V |
| 0201/Q | 0201/S | 0200/R | 0200/W | 0200/X | 0020/R | 0020/U | 0020/X |
| 1001/Q | 1001/S | 1010/R | 1010/U | 1010/X | 1000/Y | 1000/Z | 1002 |
| 2002/Q | 2002/S | 1020/T | 1020/V | 2020/R | 2020/U | 2020/X | 2000 |
| 2001/Q | 2001/S | 2010/R | 2010/U | 2010/X | 2020/R | 2020/V | |

LOOK AHEAD BLOCKS:

| Q | R | S | T | U | V | W | X | Y | Z |
|---|---|---|---|---|---|---|---|---|---|
| 0101 | 0101 | 0001 | 0201 | 1001 | 2001 | 1001 | 2002 | 1001 | 2002 |
| 0010 | 1010 | 0202 | 0200 | 0010 | 2010 | 1020 | 0202 | 1010 | 1020 |
| 0100 | 0100 | 0102 | 0020 | 1000 | 2020 | 0102 | 2020 | 1000 | 2020 |
| | | 0002 | | 1002 | 2000 | 1000 | 2000 | 1002 | 2000 |
| | | 0020 | | | | 1002 | | | |

Decoding Table for Direction Constrained
Ternary (1, 3) Code

Table 3 shows a decoding table, including lookahead blocks, for a particular implementation of a fixed length, rate 3/4, direction constrained RLL (1, 3) ternary code.

Referring now to Table 1 and Table 3, above, the (1, 3) direction constrained ternary code is of the "sliding block" type with state-dependent encoding and finite lookahead decoding. The code has a rate 3/4 corresponding to an efficiency of 92 percent. The sliding block code was popularised by Adler et al, "Algorithms for Sliding Block Codes", IEEE Transactions on Information Theory, pp. 5—22, January 1983.

In order to recover the original binary bit sequence from the ternary waveform recorded on a magnetic medium, it is first necessary to access the waveform, convert it to ternary code, and then execute a ternary to binary transformation. In this regard, Figure 5 depicts a block diagram of a system to convert the ternary waveform. This system initially differentiates the ternary waveform and then converts the differentiated waveform to a ternary code sequence. In the system represented, a read head 11 is a differentiator reading only the transitions in recorded magnetisation level and generating an output signal including peaks corresponding to these transitions. The derivative waveform output from read head 11 is sent to conventional peak detection circuity 12 which provides two logic signals as outputs. The first output 13 indicates whether a peak is detected at a given clock time. The second output 14 is obtained from a conditional circuit which ascertains whether a detected peak is positive or negative. If the output binary information state 14 of the conditional circuit is zero, then the detected peak is positive. Otherwise, the detected peak is negative. As illustrated, both of the peak detector outputs 13, 14 are fed to a peak-to-ternary finite state machine 15 which converts this information back to the original direction-constrained ternary code sequence. The peak-to-ternary FSM 15 imposes a delay on the generation of the results because the detection of each peak corresponding to a half transition requires the next peak to be detected before the associated ternary code symbol can be fully resolved. That is, recovery of the ternary code sequence is by decoding in context.

At 16 the ternary code sequence is converted into the original binary code sequence. An example of this may be seen by referring to Figure 6 which illustrates the decoding of the blocked recovered ternary string (the output of the peak-to-ternary demodulator algorithm) to the binary data string. The use of finite lookahead (not more than 1 block of 4 ternary symbols) to recover the original binary string is shown.

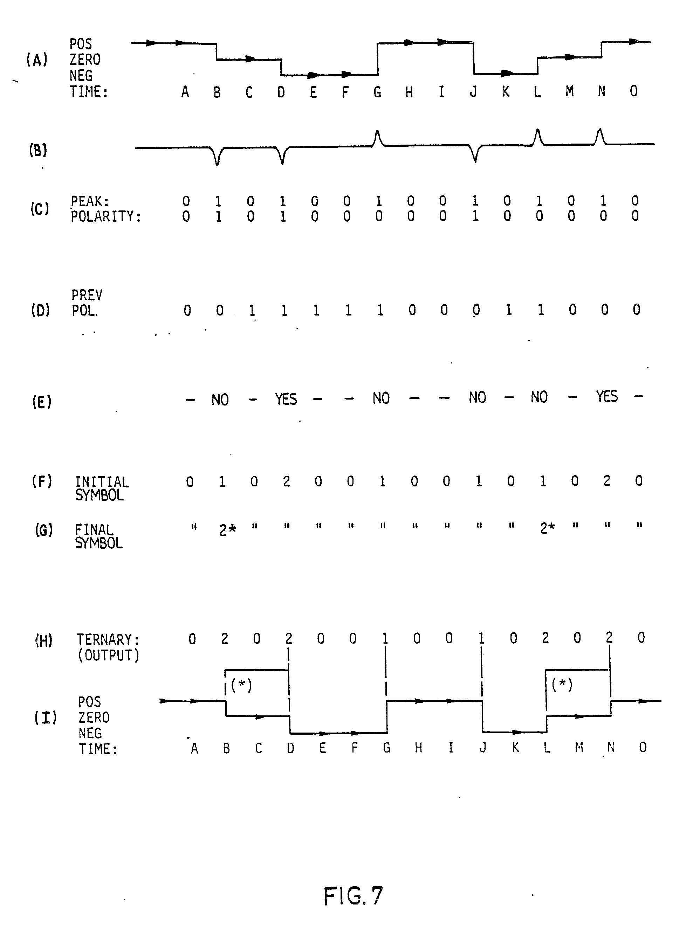

Referring now to Figure 7, there is shown an example of waveform-to-ternary conversion. The topmost waveform (A) shows the waveform as originally written. The waveform can be at any one of the three levels, POS (positive), 0, and NEG (negative). The waveform begins at the initial level POS. There are illustrated six transitions between the three levels. The successive clock times are labelled A, B, . . ., O. The next waveform (B) shows the original waveform (A) differentiated by the read head 11 (Figure 5) and shows that for each transition between levels a peak is produced. The polarity of each peak corresponds to the direction (positive or negative) of the associated transition.

Beneath this waveform is a table (C) which shows the output of the recovery FSM 15 (Figure 5) which senses the differentiated waveform (B) at each clock time, detects each peak and encodes each peak into a 2-bit code. In this 2-bit code, 00 = no peak, 10 = positive peak, and 11 = negative peak. These output code signals are represented in the two rows of table (C) and drive the peak-to-ternary demodulation algorithm contained in the peak to ternary converter 15 (Figure 5) whose output is the original direction-constrained ternary code, i.e. the output from encoder 1.

The peak-to-ternary demodulation algorithm is described below and this description, which should be considered together with Figure 7, consists of six steps.

For purposes of demodulation, the algorithm is entered into at each clock time, when the peak detector 12 generates new output values for peak and polarity (table (C), Figure 7). The algorithm consists of six steps which include:

Step 1. If there is no peak indicated in the top row of table (C) for a clock time, then the final ternary symbol assigned for that clock time is 0 (see line (F), Figure 7). The converter 15 then exits from the algorithm.

Step 2. If there is no peak indicated in the top row of table (C) for a clock time, its polarity, as indicated in the bottom row of table (C), is noted and recorded as the new previous polarity (PREVPOL) for the next clock time and the algorithm then goes to the next step.

Step 3. The current polarity (POL) of the peak is compared with PREVPOL and the result noted (line (E), Figure 7) and the algorithm then goes to the next step.

Step 4. If POL is opposite to PREVPOL, the ternary symbol "1" is provisionally assigned to the peak at this clock time (line (F), Figure 7) and the converter exits from the algorithm. If the polarities are not opposite, then the algorithm goes to the next step.

Step 5. If POL is the same as PREVPOL, the ternary symbol "2" is assigned to the peak at this clock time (line (F), Figure 7) and the algorithm goes to the next step.

Step 6. A ternary symbol "2" is assigned to the previous peak as the final symbol (line (G), Figure 7). This previous peak had been initially assigned the ternary symbol "1" (line (F), Figure 7) in Step 4. In line (G) the symbol " is used to indicate that there is no change to the ternary symbol initially assigned. The converter 15 then exits from the algorithm.

Note that line (G) shows where the delay in the generation of the ternary sequence occurs relative to the sensing of the differentiated waveform (B). That is, the final assignment of a ternary symbol to the half transition at clock time "B" is delayed as is the final assignment to the half transition at clock time "L".

Note also that PREVPOL in line (D) is only changed at a clock time when a peak is detected at that clock time.

Line (H) indicates the ternary output sequence which is generated from the input waveform illustrated at (A). The input waveform is represented again at (I) and illustrates how the polarity of the second of two successive half transitions at clock times B and D and also at clock times L and N is used to assign the correct value of ternary symbol to the first half transitions.

### TABLE 4

| TIME | INPUT TABLE C | | PREV-POL | POL = PREVPOL | INITIAL TERNARY SYMBOL | FINAL TERNARY SYMBOL | COMMENT |
|---|---|---|---|---|---|---|---|
| | PEAK | POL | | | | | |
| A | 0 | 0 | 0 | 0 | 0' | 0 | |
| B | 1 | 1 | 0 | NO | 1 | 2 | NOTE 1 |
| C | 0 | 0 | 1 | 0 | 0 | 0 | |
| D | 1 | 1 | 1 | YES | 2 | 2 | NOTE 2 |
| E | 0 | 0 | 1 | 0 | 0 | 0 | |
| F | 0 | 0 | 1 | 0 | 0 | 0 | |
| G | 1 | 0 | 1 | NO | 1 | 1 | NOTE 1 |
| H | 0 | 0 | 0 | 0 | 0 | 0 | |
| I | 0 | 0 | 0 | 0 | 0 | 0 | |
| J | 1 | 1 | 0 | NO | 1 | 1 | NOTE 1 |

Encoding Table to Convert Peak Detection to
Initial Direction Constrained Ternary Code at
Demodulator

NOTES:

1. Since POL and PREVPOL are different, this could be either the first half transition of two successive half transitions or a full transition. The next peak polarity will tell the story. If the polarity is the same, the ternary symbol assigned to this peak must be changed. If the polarity is different the symbol "1" initially assigned is correct.

2. Since POL and PREVPOL are the same, this is the second of two successive half transitions and the ternary symbol assigned to the previous peak must be changed from "1" to "2".

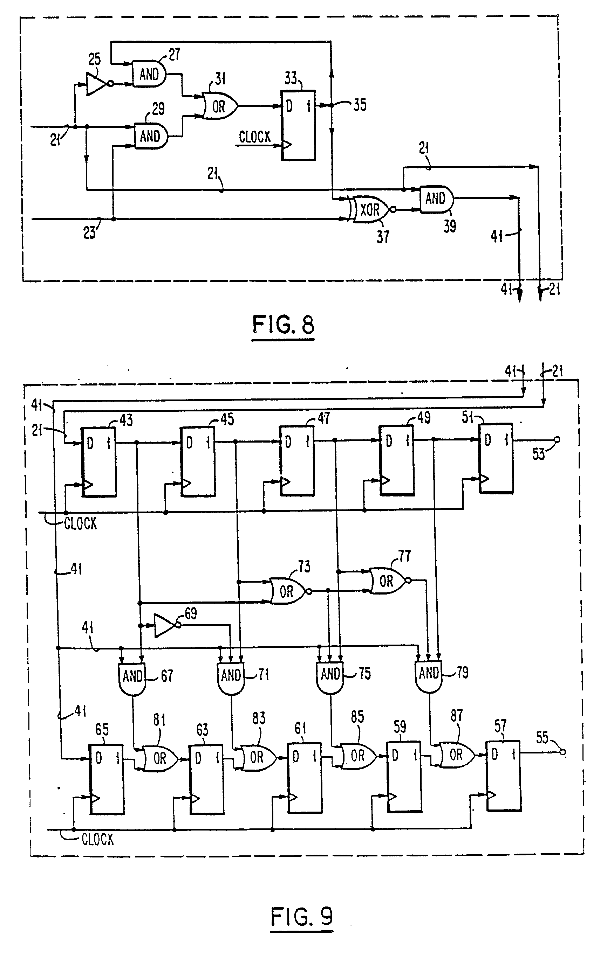

Referring now to Table 4 above, there is shown a table defining an FSM corresponding to the circuits of Figures 8 and 9 to convert signals corresponding to peak detection into an initial direction constrained ternray code and showing for each clock time A to I which ternary symbol is finally assigned to each transition detected.

Referring now to Figures 8 and 9, there is shown an embodiment for converting the detected peaks of the differentiated waveform signal obtained from the magnetic storage medium to the direction constrained ternary code. Figure 8 shows a circuit for transforming the peaks detected into an initial ternary symbol set, while Figure 9 shows a further circuit which takes this initial symbol set and converts it to a final direction constrained ternary code sequence. With reference to the peak-to-ternary (demodulation) algorithm described above with reference to Figure 7, the circuit of Figure 8 implements steps 1—5 while the circuit of Figure 9 implements step 6. It should be recalled that steps 1—5 of the algorithm are directed to tracking, for each peak detected, the polarity of the previous peak and assigning the initial symbol, while step 6 determines when the initially assigned symbol of "1" for a detected peak needs to be changed and then carries out that change.

Referring to Figure 8, a signal representative of peak detection is applied to path 1 while a signal representative of the polarity of the peak detected is applied to path 23. Relevantly, all of the flipflops in the embodiments show in Figures 8 and 9 are of the D type and are edged triggered. In this regard, reference should be made to G. G. Langdon, Jr., "Computer Design", Computeach Press, Inc., San Jose, California, United States of America, ISBN 0—9607864—0—6, pp. 512—518, copyright 1982. See also Montgomery Phister, "Logical Design of Digital Computers", Wiley, New York, 1958. Flipflop 33 is responsive either to the existence of detected peaks and polarities over paths 21 and 23 through AND gate 29 and OR gate 31, or to the absence of a peak on path 21 and a set condition of flipflop 33 set back over path 35 through AND gate 27 and OR gate 31.

Note, that the absence of peak on path 21 appears as an input to AND gate 27 through inverter 25. The input on path 21 is also applied to AND gate 39 as well as forming an input to the first stage 43 (Figure 9). The polarity signal applied on path 23 together with the output of flipflop 33 on path 35 is applied to an exclusive OR Invert gate 37. To determine if the previous two peaks had the same polarity, a signal representative of the detection of a half transition on path 41 is derived from AND gate 39 responsive to the output of exclusive OR Invert gate 37 and the peak signal condition on path 21. The output of Figure 8 is the initial ternary symbol assigned to the peak detected, as shown in line (F), Figure 7. Figure 9 is the circuit which converts the initially assigned ternary symbol for each detected peak to the final ternary symbol for each detected peak (i.e. which goes from line (F), Figure 7 to line (H) of Figure 7) by implementing step (6) of the peak-to-ternary demodulation algorithm. The final binary-coded ternary output (line (H), Figure 7) appears in the form of signals on paths 53 and 55 respectively of Figure 11. The output on path 53 is obtained as the last state output of a right shifting peak register formed by D-type flipflops 43, 45, 47, 49 and 51. The output on path 55 is obtained from the shift register chain of D-type flipflops 65, 63, 61, 59 and 57.

How many bits these shift registers must have in order to convert an initial assignment of ternary symbol "1" to a ternary symbol "2" is considered. For example, if k is the maximum allowable number of clock times between adjacent peaks, it follows that since the peak following an initial assignment of ternary symbol "1" can occur as long as k + 1 clock times later, then it is desirable to shift the ternary output symbols of the circuit in Figure 8 into a "k + 2" digit ternary symbol right-shifting shift register. In the arrangement illustrated, the value of k + 2 is 5. The ternary symbol is represented by the two binary bits called PEAK and HALF which are the outputs on paths 21 and 41 respectively. As a consequence, there exists a (k + 2) bit shift register for peak and a (k + 2) bit shift register for half. The ternary symbol representing the previous peak is the position indicated by the leftmost "1" value in the peak shift register.

If the shift register positions are numbered 1, 2 . . ., k + 2, then, when the initial ternary symbols bearing the NOTE 2 of Table 4 are to be right shifted into position 1, positions 2 through k + 1 are to be considered the allowable node transition symbols of the maximum number of clock times between peak (value k) constraint. Further, the rightmost shift register position k + 2 is the furthest position from the previous peak's ternary symbol position that could possibly receive the change.

For example, to consider the effect the change required by NOTE 2 would have on a 5-digit shift register, consider the use of a "leading 1" detection circuit fed by the outputs of positions 1 through k + 1 of the peak shift register in order to locate the bit value "1" in the lowest-numbered bit position. Suppose, for example, two half transitions occur in adjacent clock times. The peak corresponding to the first half transition will be in position 1 while the peak corresponding to the second half transition will be detected by exclusive OR gate 37 and AND gate 39. The identified bit position by the "leading 1" detection logic circuit will be in position 1. Therefore, position 2 of the half-shift register must have the value "1" after the shift. Thus, as the assigned second half transition peak symbol (ternary 2) is being shifted into position 1, the bit value "1" is being shifted into position 2 of the half-shift register. This converts the symbol from a ternary 1 to a ternary 2.

The circuit in Figure 9 accepts the binary bits representing the initial ternary symbols from the output on respective paths 21 and 41 of the circuit in Figure 8. The Figure 9 circuit selectively changes an initial ternary "1" symbol to a ternary value of "2" under specified conditions.

In Figure 9, the interstage coupling between the register stages 65, 63, 61, 59 and 57 is by way of counterpart OR gates 81, 83, 85 and 87. One input of each counterpart OR gate is the output of the

EP 0 180 100 B1

immediately adjacent D flipflop register stage. Thus, for example, to do the shift one input of OR gate 83 is formed from the output of flipflop 63. A second input into the counterpart OR gate is formed from an AND gate. Thus, AND gates 67, 71, 75 and 79 are the respective second inputs to OR gates 81, 83, 85 and 87. During an operation which converts a ternary symbol 1 to a ternary symbol 2, only one of these AND gates is value TRUE, corresponding to the peak in flipflops 43, 45, 47 or 49 with the half-transition signal on path 41. The peak is determined by a priority determination circuit consisting of inverter 69, NOR gates 73 and 77, and AND gates 67, 71, 75 and 79.

In order to change a ternary symbol 1 to ternary symbol 2, such a change occurs during a shift by forcing a "1" into the lower (HALF) shift register instead of the "O' that would have been normally shifted therein. This change occurs when the output on the line 41 is "1". This output signal thus "opens" AND gates 67, 71, 75 or 79 to the unique bit value of "1" in the peak register consisting of flipflops 43, 45, 47 and 49. This "I" is ORed into the appropriate data input of the half-shift register consisting of flipflops 63, 61, 59 and 57. In all other cases the output of the AND gates is "O". This "O" is ORed with the bit value from the previous shift stage in order to give the output of the data value.

Figure 9 shows the conversion of the recorded waveform to a ternary code sequence as described above. In Figure 9, (A) shows the original recorded waveform and table (C) shows the output of the peak detector 12 of Figure 5 for steps (1) and (2) of the algorithm. Table (C) shows the state of flipflop 33, PREVPOL, of Figure 8 for each time period for steps (1) and (2) of the algorithm. Line (E) shows whether the polarity of a detected peak is the same as the polarity of the previous peak and represents the output of XOR Invert gate 37 of Figure 8 and step (3) of the algorithm. Line F shows the ternary symbol initially assigned to each peak as represented by the output PEAK on path 21, and HALF on path 41, at each clock time, which corresponds to steps (4) and (5) of the algorithm. These two binary signals are for the initially assigned ternary symbol. Finally, line G shows the output of Figure 9, which corresponds to step (6) of the algorithm.

For example, consider what happens at clock time "D", when the second peak is detected. Line (D) shows it to have a positive polarity and the line (E) has "YES", meaning the polarity is the same as the polarity of the previous peak. Line (F) shows the assigned ternary symbol is "2" since POL is the same as PREVPOL and this indicates that the peak at time D represents the second of two successive half transitions. However, now the initial ternary symbol of "1" assigned to the peak detected at clock time B must be converted to ternary symbol "2" since the peak at this time must represent the first of the two successive half transitions. So, while the ternary symbol assigned at clock time "D" is going to be shifted into flipflops 43 and 65, the ternary symbol assigned at clock time "B" will be shifted into flipflops 47 and 61. The conversion of ternary symbol 1 to ternary symbol 2 is done through inverter 69, AND gate 71 (all of whose inputs are TRUE), and OR gate 61.

**Claims**

1. Apparatus for recording representations of a binary symbol sequence comprising conversion means (1) for converting said binary symbol sequence into a ternary symbol sequence, and recording means (3, 5, 7) for recording representations of said ternary symbol sequence, characterised in that said conversion means comprises mapping means for mapping said binary symbol sequence into a directon constrained run length limited ternary symbol sequence, and said recording means comprises means for recording said ternary symbol sequence as selected recording levels with half transitions and full transitions between recording levels in such a way that each half transition is followed by another half transition of the same polarity.

2. Apparatus as claimed in Claim 1 characterised in that said mapping means comprises blocking means for k − bit blocking said binary symbol sequence, and conversion means for converting said blocked binary sequence into a direction constrained run length limited n − bit blocked ternary symbol sequence (where n > k) at a predetermined rate.

3. Apparatus as claimed in Claim 1 or Claim 2 in combination with an apparatus (11—16) for recovering said binary symbol sequence from said recorded representations comprising reading means for generating output signals corresponding to said recorded representations and for converting said output signals into said binary symbol sequence, said reading means comprising detecting means (11, 12) for detecting each transition in said recording levels, for determining the polarity of each detected transition and for generating corresponding signals, first converting means (15) for converting said signals into a ternary symbol sequence, and second converting means (16) for converting said ternary symbol sequence into said binary symbol sequence.

4. A combination as claimed in Claim 3 characterised in that said first converting means comprises means for initially assigning a ternary symbol to each detected transition, and means for subsequently modifying said initially assigned ternary symbol in accordance with the polarity of a succeeding detected transition.

5. A method of recording representations of a binary symbol sequence comprising converting said binary symbol sequence into a ternary symbol sequence, and recording representations of said ternary symbol sequence, characterised in that said conversion operation comprises mapping said binary symbol sequence into a direction constrained run length limited ternary symbol sequence, and said recording

9

operation comprises recording said ternary symbol sequence as selected recording levels with half transitions and full transitions between recording levels in such a way that each half transition is followed by another half transition of the same polarity.

6. A method as claimed in Claim 5 characterised in that said mapping operation comprises k − bit blocking said binary symbol sequence, and converting said blocked binary sequence into a direction constrained run length limited n − bit blocked ternary symbol sequence (where n > k) at a predetermined rate.

7. A method as claimed in Claim 5 or Claim 6 in combination with a method for recovering said binary symbol sequence from said recorded representations comprising generating output signals corresponding to said recorded representations and converting said output signals into said binary symbol sequence, said signal generating operation comprising detecting each transition in said recording levels and detecting the polarity of each detected transition and generating corresponding signals, initially converting said signals into a ternary symbol sequence, and subsequently converting said ternary symbol sequence into said binary symbol sequence.

8. A combination as claimed in Claim 7 characterised in that said initial converting operation comprises initially assigning a ternary symbol to each detected transition and subsequently modifying said initially assigned ternary symbol in accordance with the polarity of a succeeding detected transition.

**Patentansprüche**

1. Gerät für die Aufzeichung von Darstellungen einer binären Zeichenfolge, enthaltend Umwandlungsmittel (1) für die Umwandlung der besagten binären Zeichenfolge in eine ternäre Zeichenfolge, und Aufzeichnungsmittel (3, 5, 7) für die Aufzeichnung von Darstellungen der besagten ternären Zeichenfolge, dadurch gekennzeichnet, daß besagtes Umwandlungsmittel Auflistungsmittel für die Aufzeichnung besagter binärer Zeichenfolge in eine ternäre Zeichenfolge mit vorgegebener Richtung und begrenzter Lauflänge enthält, und besagtes Aufzeichnungsmittel Mittel zum Aufzeichnen besagter ternärer Zeichenfolge als ausgewählte Aufzeichnungspegel mit halben Übergängen und ganzen Übergängen zwischen Aufzeichnungspegeln in einer Weise enthält, daß auf jeden Halbübergang ein anderer Halbübergang der gleichen Polung folgt.

2. Gerät gemäß Anspruch 1 dadurch gekennzeichnet, daß das besagte Auflistungsmittel enthält Sperrmittel zum Sperren der besagten binären Zeichenfolge für k Bit, und Umwandlungsmittel zum Umrechnen der besagten gesperrten binären Zeichenfolge in eine ternäre Zeichenfolge mit vorgegebener Richtung mit begrenzter Lauflänge mit n — bit (mit n > k) in einer vorgegebenen Geschwindigkeit.

3. Gerät gemäß Anspruch 1 oder 2 in Verbindung mit einem Gerät (11—6) für die Wiederherstellung der besagten binären Zeichenfolge aus besagten aufgezeichneten Darstellungen, enthaltend, Lesemittel für die Erzeugung von Ausgangssignalen, die den besagten aufgezeichneten Darstellungen entsprechen, und für die Umwandlung der besagten Ausgangssignale in besagte binäre Zeichenfolge, Detektionsmittel (11, 12) für die Detektion eines jeden Übergangs in besagten Aufzeichnungspegeln, für die Ermittlung der Polung eines jeden detektierten Übergangs und für die Erzeugung entsprechender Signale, erste Umwandlungsmittel (15) für die Umwandlung der besagten Signale in eine ternäre Zeichenfolge, und zweite Umwandlungsmittel (16) für die Umwandlung der besagten ternären Zeichenfolge in besagte binäre Zeichenfolge.

4. Verbindung gemäß Anspruch 3 dadurch gekennzeichnet, daß das erste Umwandlungsmittel enthält Mittel für die ursprüngliche Zuordnung eines ternären Zeichens für jeden detektierten Übergang, und Mittel dür die nachfolgende Änderung des besagten ursprünglich zugeordneten ternären Symbols in Übereinstimmung mit der Polung eines danach detektierten Übergangs.

5. Verfahren der Aufzeichnung von Darstellungen einer binären Zeichenfolge, enthaltend die Umwandlung besagter binärer Zeichenfolge in eine ternäre Zeichenfolge, und die Aufzeichnung der Darstellungen der besagten ternären Zeichenfolge, dadurch gekennzeichnet, daß besagter Umwandlungsvorgang die Auflistung der besagten binären Zeichenfolge in eine ternäre Zeichenfolge mit vorgegebener Richtung und begrenzter Lauflänge enthält, und besagter Aufzeichnungsvorgang die Aufzeichnung besagter ternärer Zeichenfolge als ausgewählte Aufzeichnungspegel mit halben Übergängen und mit ganzen Übergängen zwischen Aufzeichnungspegeln in solcher Weise erfolgt, daß auf jeden Halbübergang ein anderer Halbübergang gleicher Polung folgt.

6. Verfahren gemäß Anspurch 5 dadurch gekennzeichnet, daß besagter Auflistungsvorgang enthält k — Bit Blockieren der besagten binären Zeichenfolge, und Umwandlung der besagten blockierten binären Folge in eine n − blockierte ternäre Zeichenfolge mit vorgegebener Richtung mit beschränkter Lauflänge (wobei n > k) in einer vorgegebenen Geschwindigkeit.

7. Verfahren gemäß Anspruch 5 oder Anspruch 6, in Verbindung mit einem Verfahren für die Rückgewinnung der besagten binären Zeichenfolge von besagten aufgezeichneten Darstellungen, mit der Erzeugung von Ausgangssignalen, die den besagten aufgezeichneten Darstellungen entsprechen, und Umrechnung der besagten Ausgangssignale in besagte binäre Zeichenfolge, wobei besagter Signalerzeugungsvorgang enthält: die Detektion eines jeden Übergangs in besagten Aufzeichnungspegeln und die Detektion der Polung eines jeden detektierten Übergangs und die Erzeugung entsprechender Signale, die anfängliche Umwandlung der besagten Signale in eine ternäre Zeichenfolge, und die anschließende Umwandlung der besagten ternären Zeichenfolge in besagte binäre Zeichenfolge.

8. Verbindung gemäß Anspruch 7 dadurch gekennzeichnet, daß besagter anfänglicher Umwandlungsvorgang enthält die ursprüngliche Zuordnung eines ternären Zeichens für jeden detektierten Übergang, und die anschließende Änderung des besagten zugeordneten ternären Symbols in Übereinstimmung mit der Polung eines anschließend detektierten Übergangs.

**Revendications**

1. Appareil pour enregistrer des représentations d'une séquence de symboles binaires comprenant: des moyens de conversion (1) pour convertir la dite séquence de symboles binaires en une séquence de symboles ternaires, et des moyens d'enregistrement (3, 5, 7) pour enregistrer des représentations de ladite séquence de symboles ternaires caractérisé en ce que lesdites moyens de conversions comprennent des moyens de correspondance pour projeter ladite séquence de symboles binaires en une séquence de symboles ternaires à longueur de passage limitée et à contrainte de direction, et lesdits moyens d'enregistrement comprennent des moyens pour enregistrer ladite séquence de symbole ternaires sous la forme de niveaux d'enregistrement choisis, avec des demi-transitions et des transitions complètes entre niveaux d'enregistrement, d'une manière telle que chaque demi-transition est suivie d'une autre demi-transition de la même polarité.

2. Appareil suivant la revendication 1, caractérisé en ce que lesdites moyens de correspondance comprennent des moyens de groupage pour grouper k bits de ladite séquence de symboles binaires, et des moyens de conversion pour convertir ladite séquence binaire groupée en une séquence de symboles ternaires à n bits groupés à longueur de passage limitée et à contrainte de direction (dans laquelle n > k) à une cadence prédéterminée.

3. Appareil suivant la revendication 1 ou la revendication 2, en combinaison avec un appareil (11—16) pour rétablir ladite séquence de symboles binaires à partir desdites représentations enregistrées, comprenant des moyens de lecture pour générer des signaux de sortie correspondant auxdites représentations enregistrées et pour convertir lesdits signaux de sortie en ladite séquence de symboles binaires, lesdits moyens de lecture comprenant des moyens de détection (11, 12) pour détecter chaque transition desdites niveaux, d'enregistrement, pour déterminer la polarité de chaque transition détectée et pour générer des signaux correspondants, des premiers moyens de conversion (15) pour convertir lesdits signaux en une séquence de symboles ternaires, et des deuxiémes moyens de conversion (16) pour convertir ladite séquence de symboles ternaires en la dite séquence de symboles binaires.

4. Combinasion suivant la revendication 3, caractérisée en ce que lesdites premiers moyens de conversion comprennent de moyens pour attribuer initialement un symbole ternaire à chaque transition détectée, et des moyens pour modifier ensuite ledit symbole ternaire initialement attribué, en fonction dela polarité d'une transition détectée suivant.

5. Méthode d'enregistrement de représentations d'une séquence de symboles binaires comprenant la conversion de ladite séquence de symboles binaires en une séquence de symboles ternaires, et l'enregistrement de représentations de ladite séquence de symboles ternaires, caractérisée en ce que ladite opération de conversion comprend la projection de ladite séquence de symboles binaires en une séquence de symboles ternaires à longueur de passage limitée et à contrainte de direction, et ladite opération d'enregistrement comprend l'enregistrement de ladite séquence de symboles ternaires sous la forme de niveaux d'enregistrement choisis, avec des demi-transitions et des transitions complètes entre niveaux d'enregistrement, d'une manière telle que chaque demi-transition est suivie d'une autre demi-transition de la même polarité.

6. Méthode suivant la revendication 5, caractérisée en ce que ladite opération de correspondance comprend le groupage à k bits de ladite séquence de symboles binaires, et la conversion de ladite séquence binaire groupée en une séquence de symboles ternaires à groupes de n bits (avec n > k) à longueur de passage limitée et à contrainte de direction, à une cadence prédéterminée. 7. Méthode suivant la revendication 5 ou la revendication 6, en combinaison avec une méthode pour le rétablissement de ladite séquence de symboles binair es à partir desdites représentations enregistrées, comprenant la génération de signaux de sortie correspondant auxdites représentations enregistrées et la conversion desdits signaux de sortie en ladite séquence de symboles binaires, ladite opération de génération des signaux comprenant la détection de chaque transition desdits niveaux d'enregistrement, la détection de la polarité de chaque transition détectée et la génération de signaux correspondants, la conversion initiale desdits signaux en une sequence de symboles ternaires, et la conversion subséquente de ladite séquence de symboles ternaires en ladite séquence de symboles binaires.

8. Combinaison suivant la revendication 7, caractérisée en ce que ladite opération de converson initiale comprend l'attribution initiale d'un symbole ternaire à chaque transition détectée, et la modification subséquente dudit symbole ternaire initialement attribué, en fonction de la polarité d'une transition détectée suivante.

FIG. 1

FIG. 2

FIG. 3

```
      001     110     010     100     111
    ↗       ↗       ↗       ↗       ↗
A.      B.      K.      F.      E.      L.


  . 0101 . 0020 . 0200 . 1010 . 2000
```

## FIG. 4

```
  11 ⌐         12 ⌐      13 ⌐          15 ⌐              16 ⌐
 ┌────────┐   ┌─────────┐        ┌───────────┐    ┌─────────────┐
 │  READ  │   │  PEAK   │──────→ │  PEAK  TO │    │   TERNARY   │────→
 │  HEAD  │──→│ DETECT  │        │  TERNARY  │ •─→│  TO BINARY  │
 └────────┘   └─────────┘──────→ └───────────┘    └─────────────┘
                              14 ⌐       │
                                         └──────→ 0, 1  OR  2
```

## FIG. 5

```
 . 0101 . 0020 . 0200 . 1010 . 2000 .
   ‾‾‾‾‾‾‾‾‾‾‾‾

0101/S └─────────────────────┐
        0020/T └───────────────────┐
              0200/R └─────────────────┐
                     1010/X └────────────┐
                             2000
    │        │        │        │        │
    ↓        ↓        ↓        ↓        ↓
 . 001   . 110   . 010   . 100   . 111
```

## FIG. 6

FIG.7

FIG. 8

FIG. 9